(19)

Europäisches
Patentamt
European
Patent Office
Office européen
des brevets

(11) **EP 4 545 689 A1**

(12) **EUROPEAN PATENT APPLICATION**

(43) Date of publication:
**30.04.2025  Bulletin 2025/18**

(21) Application number: **23206190.3**

(22) Date of filing: **26.10.2023**

(51) International Patent Classification (IPC):
$C25B\ 15/02$ (2021.01)     $C25B\ 15/08$ (2006.01)
$C25B\ 1/04$ (2021.01)      $H02J\ 3/28$ (2006.01)
$H02J\ 15/00$ (2006.01)     $G06Q\ 10/04$ (2023.01)

(52) Cooperative Patent Classification (CPC):
**C25B 1/04; C25B 15/02; C25B 15/08;**
**G06Q 10/063; G06Q 10/0832; G06Q 50/06;**
**H02J 3/28; H02J 15/008**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Siemens Gamesa Renewable Energy**
**A/S**
**7330 Brande (DK)**

(72) Inventor: **Zarrilli, Donato**
**22043 Hamburg (DE)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **METHOD FOR OPERATING A POWER-TO-HYDROGEN SYSTEM AND POWER-TO-HYDROGEN SYSTEM**

(57)    The present invention relates to a method for operating a Power-To-Hydrogen system (10) comprising at least one electricity source (1), at least one electrolyzer (2), a first hydrogen storage device (3) with permanent availability and a hydrogen transfer station (4). The hydrogen transfer station (4) is adapted and configured to be coupled temporarily to one or multiple second hydrogen storage devices (5,51,52) with time-dependent availability for a transfer of hydrogen to the one or multiple second hydrogen storage devices (5,51,52). A hydrogen production rate (P(t)) of the electrolyzer (2) is controlled based on a forecasted total available hydrogen storage capacity, wherein the forecasted total available hydrogen storage capacity comprises a storage capacity (X) of the first hydrogen storage device (3) and a time-dependent storage capacity of the second hydrogen storage device (5,51,52) provided by a hydrogen storage capacity model (C(t)).

The method according to invention allows for an optimized hydrogen production planning and thus improves both profitability and sustainability of the Power-To-Hydrogen system.

FIG 4

EP 4 545 689 A1

**Description**

The present invention relates to a method for operating a Power-To-Hydrogen system and to a Power-To-Hydrogen system itself.

Power-To-Hydrogen (P2H) systems are widely seen as an important component of future fully renewable energy systems an/or energy systems with reduced carbon dioxide emissions. Typical P2H systems comprise an energy source, an electrolyzer coupled to the electricity source, a hydrogen storage tank and a hydrogen transfer station that allows for a transfer of hydrogen from the hydrogen storage tank to hydrogen transport infrastructure. Additionally, P2H systems typically comprise at least one compressor that compresses hydrogen produced by the electrolyzer to a predefined pressure level before feeding the hydrogen storage tank. P2H systems may also be coupled to an electrical grid so that they can act as a downward reserve to ensure grid stability in the event of control interventions.

P2H systems can be in particular embedded to hybrid power plants in that the electricity source of the P2H system comprises an electricity source installed on site. The electricity source can in particular comprise at least one renewable energy source, e.g. at least one wind turbine and/or at least one photovoltaic (PV) module.

As typical installations of renewable energy sources and the associated P2H systems are very often located in remote regions that lack pipeline infrastructure, the produced hydrogen is typically transported from the sites by mobile hydrogen storage units like gas transport vessels or gas transport trucks.

If exclusively electricity from renewable energy sources is used the produced hydrogen is called "green hydrogen". In case at least partly electricity from fossil sources is used to produce the hydrogen it is called "yellow hydrogen". "Green hydrogen" generally has a higher "value" and can be sold at higher prices.

As the availability of renewable energy sources is intermittent, intelligent planning of hydrogen production is key to an optimized utilization of the P2H system's production capacity, in particular with regard to the production capacity of the electrolyzer as the "heart" of the P2H system.

In today's P2H system's hydrogen production planning only future renewable energy production profiles and the storage capacity at the present time are considered.

This lack of a "look ahead" results in several negative effects. Firstly, the P2H system might fail to meet its overall hydrogen production targets and/or fail to meet a minimum usage of electricity from renewable sources to produce green hydrogen so that obligations from hydrogen purchase agreements might be violated. Secondly, the lack of a proper hydrogen production planning can lead to an unnecessary number of "on/off" switching cycles of the electrolyzer that are detrimental to the electrolyzer's performance as switching cycles are considered to cause degradation of the electrolyzer's efficiency. Thirdly, under certain operation conditions, in particular if the P2H system is requested to operate as a downward reserve to the electrical grid, hydrogen might even have to be released to the atmosphere due to a lack of hydrogen storage capacity which is ineffective and is associated with safety problems.

It is an object of the present invention to provide a method for operating a Power-To-Hydrogen system that allows for an optimized hydrogen production planning and thus improves both profitability and sustainability of the Power-To-Hydrogen system.

It is a further object of the present invention to provide a Power-To-Hydrogen system that allows for an optimized hydrogen production planning and thus exhibits improved profitability and sustainability.

In accordance with a first aspect of the invention, a method for operating a Power-To-Hydrogen system is proposed. The Power-To-Hydrogen system comprises at least one electricity source, at least one electrolyzer for producing hydrogen from electricity received from the electricity source, a first hydrogen storage device with permanent availability coupled to the electrolyzer and a hydrogen transfer station coupled to the first hydrogen storage device and/or the electrolyzer. The hydrogen transfer station is adapted and configured to be coupled temporarily to one or multiple second hydrogen storage devices with time-dependent availability for a transfer of hydrogen from the first hydrogen storage device and/or the electrolyzer to the one or multiple second hydrogen storage devices. According to the inventive method a hydrogen production rate of the electrolyzer is controlled based on a forecasted total available hydrogen storage capacity, wherein the forecasted total available hydrogen storage capacity comprises a storage capacity of the first hydrogen storage device and a time-dependent storage capacity of the second hydrogen storage device provided by a hydrogen storage capacity model.

The hydrogen production rate of the electrolyzer can in particular be controlled as a percentage of its nominal production rate, e.g. between 0 and 100%. Therein, an actual hydrogen production rate can be selected in predetermined steps or steplessly. In embodiments controlling the hydrogen production rate might simply mean that the electrolyzer is selectively switched on or off.

"Forecast" or "forecasted" herein generally describes an estimation of a future event or status which can be made by incorporating and casting forward data related to the past and/or the present in a pre-determined and systematic manner. "Forecast" or "forecasted" as referred to herein can be in particular based on the application of a statistical model. A "forecast" as referred to herein can in particular include the consideration of data about future events or statuses (e.g. an availability schedule of the second hydrogen storage devices) as well to estimate the future event or status.

In contrast to the state of the art, the method according to the invention considers both current and future storage capacities of the first hydrogen storage device with permanent availability and the second hydrogen storage device with time-dependent availability in hydrogen production planning.

While in today's P2H systems the storage capacity of the second hydrogen storage device with time-dependent availability is not used as a flexibility asset at all the method according to the invention considers the first hydrogen storage device with permanent availability and the second hydrogen storage device with time-dependent availability as a common storage asset which helps to utilize the P2H system's production capacity, in particular the production capacity of the electrolyzer, in an optimal way. This not least helps to avoid production bottlenecks.

In other words, the consideration of the time-dependent storage capacity of the second hydrogen storage device as a part of the forecasted total available hydrogen storage capacity allows to plan hydrogen production based on a "virtual hydrogen storage capacity", wherein said "virtual hydrogen storage capacity" includes the hydrogen storage capacity model as the main influencing factor.

Such an optimized hydrogen production planning has the advantage that it is easier to meet hydrogen production targets and/or meet a minimum usage of electricity from renewable sources to produce green hydrogen so that violations of hydrogen purchase agreements can be avoided. Further, the number of switching cycles of the electrolyzer can be reduced which helps to prevent premature degradation of the electrolyzer's efficiency. In addition, the release of hydrogen to the atmosphere in case the P2H system is operated as a downward reserve to an electrical grid can be prevented or at least reduced.

Overall, the method according to the invention allows to operate a P2H system more economically and sustainably.

Additionally, the consideration of both current and future storage capacities of the first hydrogen storage device with permanent availability and the second hydrogen storage device with time-dependent availability in hydrogen production planning allows to avoid investment cost for further and/or larger stationary hydrogen storage devices so that a P2H system that is operated with the method according to the invention can be erected and operated at much lower cost than P2H systems operated according to the state of the art. Expressed differently, the method according to the invention allows to reduce the (nominal) storage capacity of the first hydrogen storage device, in particular already during an investment planning phase of a (new) P2H system, since the time-dependent hydrogen storage capacity of the second hydrogen storage device(s) is utilized to the maximum and considered as a common "virtual hydrogen storage capacity" together with the hydrogen storage capacity of the first hydrogen storage device. In some instances, this can even allow the first hydrogen storage device to be reduced to a technically smallest possible size, e.g. a size just sufficient to act as a buffer storage during strictly limited periods of time of operation of the P2H system, e.g. during periods of time when second hydrogen storage device(s) is/are temporarily unavailable.

Consequently, according to an alternative method for operating a Power-To-Hydrogen system the P2H system might even be provided without a first hydrogen storage device, wherein the electrolyzer can be in particular directly coupled to the hydrogen transfer station. According to this alternative method, the hydrogen production rate of the electrolyzer can still be controlled based on a forecasted total available hydrogen storage capacity. The forecasted total available hydrogen storage capacity however only comprises the time-dependent storage capacity of the second hydrogen storage device provided by the hydrogen storage capacity model.

According to a further embodiment, the one or multiple second hydrogen storage devices can comprise one or multiple mobile hydrogen storage units, in particular gas carriers, the availability of which at the hydrogen transfer station is considered in the hydrogen storage capacity model.

"Gas carrier" can in particular mean a truck, a train and/or a vessel. The invention is however not limited to any specific type of mobile hydrogen storage unit but comprises alternative mobile hydrogen storage solutions that the skilled person considers suitable in the context of the present invention as well. In other words, any vehicle, be it a land vehicle, a water vehicle or an aircraft, that allows for a storage of hydrogen can be considered a "mobile hydrogen storage unit" in the sense of the present invention.

In embodiments, the second hydrogen storage device with time-dependent availability can even comprise storage infrastructure that is stationary, e.g. a pipeline or a gas tank with intermittent availability.

According to a further embodiment, the first hydrogen storage device can be a stationary hydrogen storage unit, in particular comprising at least one gas tank. The first hydrogen storage device can be in particular installed close to the electrolyzer to reduce the length of a connection piping. Generally, the first hydrogen storage device can be permanently installed on site.

According to yet a further embodiment, the hydrogen storage capacity model can consider at least one time-dependent weather parameter, in particular a temperature. The consideration of a temperature, in particular the local temperature, in the forecast of the total available hydrogen storage capacity increases accuracy as the volume change of the hydrogen with changing temperature is taken into account. This even further optimizes hydrogen production planning. The effect of a change in temperature on the storage capacity of the first and/or second hydrogen storage device can be approximated by the ideal gas law, for example.

According to a further embodiment, the hydrogen storage capacity model can consider an availability schedule of mobile hydrogen storage units at the hydrogen transfer station. The availability schedule can be based on a logistics planning system and can in particular include information about presence time slots in that one or multiple mobile hydrogen storage units are coupled to the hydrogen transfer station.

In embodiments, the hydrogen storage capacity model can be expressed according to the generic equation:

$$C(t) = \sum_i A_i(t) \cdot c_i(t)$$

wherein

$A_i(t)$      is the availability schedule of mobile hydrogen storage units at the hydrogen transfer station,
$C_i(t)$ hydrogen      storage unit and is the storage capacity of a specific mobile
$t$      is the time.

As already touched upon above, $c_i(t)$ can include a temperature dependency to consider the effect of temperature changes on the storage capacity which tends to increase as temperatures fall and decrease as temperatures rise. Further, values for $A_i(t)$ may be '1' for mobile hydrogen storage unit(s) being coupled to the hydrogen transfer station at a specific time and '0' otherwise.

According to yet another embodiment, the hydrogen production rate of the electrolyzer can be further controlled based on a forecasted hydrogen demand, wherein the forecasted hydrogen demand in particular comprises a forecast on amounts of hydrogen to be transferred to the one or multiple second hydrogen storage devices at a specific time.

The forecasted hydrogen demand can be in particular provided by a hydrogen demand model, considering a departure schedule of one or multiple mobile hydrogen storage units from the hydrogen transfer station.

In embodiments, the hydrogen demand model can further consider an initial hydrogen filling level of the one or multiple mobile hydrogen storage units before the latter are coupled to the hydrogen transfer station.

In particular, the hydrogen demand model can be expressed according to the generic equation:

$$D(t) = \sum_i O_i(t) \cdot (c_i(t) - s_i(t_A))$$

wherein

$O_i(t)$      is a departure schedule of the one or multiple mobilehydrogen storage units from the hydrogen transfer station,
$c_i(t)$      is the storage capacity of a specific mobile hydrogen storage unit,
$s_i(t_A)$      is the initial hydrogen filling level of the one or multiple mobile hydrogen storage units before coupling to the hydrogen transfer station, i.e. at arrival,
$t_A$      is the arrival time of a specific mobile hydrogen storage unit at the hydrogen transfer station and
$t$      is the time.

In above equation values for $O_i(t)$ may be '1' for mobile hydrogen storage unit(s) departing at a specific time and '0' otherwise.

The term $s_i(t_A)$ considers a "residual" filling level of the one or multiple mobile hydrogen storage units before their arrival on site which reduces their effective storage capacity.

The method according to the invention can in particular be executed on a processing entity, e.g. a controller comprising at least one computer.

The processing entity may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

According to a further embodiment, the electricity source can comprise a connection to an electrical grid, in particular a medium voltage or high voltage grid. Additionally or alternatively, the electricity source can comprise a local electricity generating entity, in particular a renewable energy source.

The local electricity generating entity can be installed in the proximity of the electrolyzer at a common site. The local electricity generating entity may generate electricity that is used in the electrolyzer in some operational states while in other operational states its electricity can be at least partly fed to the electrical grid.

The renewable energy source can in particular comprise at least one wind turbine and/or at least one photovoltaic (PV) module. The renewable energy source may however comprise any renewable energy source, in particular with intermittent availability, which the skilled person deems suitable in the context of the present invention, e.g. a tidal power plant or a wave power plant.

According to a further embodiment, the Power-To-Hydrogen system can comprise at least one compressor coupled to the electrolyzer and the first hydrogen storage, the compressor being adapted and configured to compress hydrogen produced by the electrolyzer before feeding the first hydrogen storage device.

In embodiments, the first hydrogen storage device and/or the one or multiple second hydrogen storage devices can comprise pressure tanks that are configured to withstand typical hydrogen storage pressure levels. Those typical pressure levels may reach from 50 to 700 bar, in particular more than 350 bar.

Alternatively or additionally, the P2H system can comprise a cryogenic hydrogen liquefaction device that is adapted and configured to liquefy the hydrogen produced by the electrolyzer before feeding the first hydrogen storage device.

In embodiments, the first hydrogen storage device and/or the one or multiple second hydrogen storage devices can comprise at least one cryogenic storage means.

According to a yet further embodiment, the Power-To-Hydrogen system can be used as a downward reserve in an electrical grid, in particular wherein the electrolyzer consumes excess electricity from the electrical grid for frequency and/or voltage stabilization of the electrical grid.

In embodiments, the hydrogen production rate of the electrolyzer can be further controlled based on a forecasted availability of the electricity source, the forecasted availability of the electricity source in particular comprising information on time-dependent available quantities of electricity.

The information on time-dependent available quantities of electricity may in particular comprise information on a planned control intervention to the electrical grid, i.e. certain time slots in that the P2H system is requested to operate as downward reserve to the electrical grid for frequency and/or voltage stabilization.

Additionally or alternatively, the information on time-dependent available quantities of electricity can comprise a production forecast of the local electricity generating entity, in particular of the renewable energy source.

In embodiments, the forecasted availability of the electricity source considers at least one time-dependent weather parameter, in particular a local solar irradiation and/or a local wind parameter. By considering at least one weather parameter a sufficiently accurate production forecast of the local electricity generating entity, in particular of the renewable energy source, can be provided.

For example, the hydrogen production can be stopped, i.e. the hydrogen production rate of the electrolyzer can be set to 0% of its nominal production rate, if the forecasted availability of the electricity source predicts a lack of electricity for a given time period. In case the local electricity generating entity is a renewable energy source this can be in particular based on a production forecast in the case of low or no wind and/or low or no solar irradiation for a given time period.

According to another embodiment, the hydrogen production rate of the electrolyzer can be further controlled based on an electricity price, in particular a forecasted electricity price. The electricity price may in particular be a spot market price.

By considering an electricity price within the hydrogen production planning regime according to the invention the operation of the P2H system is rendered even more economical, in particular because it allows the P2H system to participate in the electricity market and benefit from volatile electricity prices.

For example, if the electricity price for a certain time slot is higher than the hydrogen price the hydrogen production rate of the electrolyzer may be set to '0' so that no hydrogen is produced in this time slot. Instead, in this time slot the local electricity generating entity, in particular the renewable energy source, may produce electricity which is fed to the electrical grid.

According to another example, if the electricity price for a certain time slot is lower than the hydrogen price or even negative the hydrogen production rate of the electrolyzer may be set to a maximum value so that hydrogen is produced in this time slot.

According to a further embodiment, the method can comprise a comparison of the forecasted total available hydrogen storage capacity with a forecasted total hydrogen filling level in the first and second hydrogen storage devices. Based on a result of the comparison the hydrogen production rate of the electrolyzer can be controlled.

If the forecasted total hydrogen filling level in a specific time slot exceeds the forecasted total available hydrogen storage capacity, i.e. there is not sufficient storage capacity on site, the hydrogen production rate of the electrolyzer can be reduced or hydrogen production is stopped completely.

Additionally or alternatively, based on a result of the comparison at least one or multiple further second hydrogen storage devices can be provided to the hydrogen transfer station to extend the total available hydrogen storage capacity. "Providing one or multiple further second hydrogen storage devices" can in particular have the meaning that at least one further second hydrogen storage device is ordered to the hydrogen transfer station at a specific time. This might in particular be applied if the production forecast of the local electricity generating entity, in particular of the renewable energy source, which can be in particular based on a time-dependent weather parameter, in particular a local solar irradiation and/or a local wind parameter, predicts high electricity production in a specific time slot. By "ordering" one or multiple further second hydrogen storage devices to the hydrogen transfer station it can be ensured that the electricity available in the specific time slot is utilized as completely as possible to produce (green) hydrogen.

Said comparison can be in particular carried out based on the following generic first-order difference equation:

$$0 \leq S(t-1) + P(t) \cdot \Delta t - D(t) \leq C(t) + X$$

wherein

$$S(t-1) + P(t) \cdot \Delta t - D(t) = S(t)$$

and wherein

S(t)     is a forecasted total hydrogen filling level at time t,
S(t-1)   is a total hydrogen filling level at a prior time step,
Δt       is the sampling time (e.g. an hour),
X        is the storage capacity of the first hydrogen storagedevice,
D(t)     is the hydrogen demand model,
P(t)     is the hydrogen production rate of the electrolyzer,
C(t)     is the hydrogen storage capacity model and
t        is the time.

Above difference equation may be solved or approximated by a processing entity to allow for a control of the hydrogen production rate of the electrolyzer (solution for P(t)) and/or to steer the presence of second hydrogen storage devices at the hydrogen transfer station (solution for C(t)).

According to a further aspect, the invention relates to a computer program product comprising a program code for executing the above-described method for operating a Power-To-Hydrogen system when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Accoding to a second aspect, the invention relates to a Power-To-Hydrogen system comprising

- at least one electricity source,
- at least one electrolyzer for producing hydrogen from electricity received from the electricity source,
- a first hydrogen storage device with permanent availability coupled to the electrolyzer and
- a hydrogen transfer station coupled to the first hydrogen storage device and/or the electrolyzer,
- wherein the hydrogen transfer station is adapted and configured to be coupled temporarily to one or multiple second hydrogen storage devices with time-dependent availability for a transfer of hydrogen from the first hydrogen storage device and/or the electrolyzer to the one or multiple second hydrogen storage devices and
- a processing entity for controlling at least a hydrogen production rate of the electrolyzer.

The processing entity, e.g. a controller comprising a computer, for example, is operable to execute the method for operating a Power-To-Hydrogen system according to the first aspect of the invention. Thus, a hydrogen production rate of the electrolyzer is controllable based on a forecasted total available hydrogen storage capacity, wherein the forecasted total available hydrogen storage capacity comprises a storage capacity of the first hydrogen storage device and a time-dependent storage capacity of the second hydrogen storage device provided by a hydrogen storage capacity model.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:

Fig. 1 shows a schematic representation of a Power-To-Hydrogen system according to a first embodiment of the invention;

Fig. 2 shows a schematic representation of a Power-To-Hydrogen system according to a second embodiment of the invention;

Fig. 3 shows a schematic representation of a Power-To-Hydrogen system according to a third embodiment of the invention;

Fig. 4 shows a schematic representation of a Power-To-Hydrogen system according to a fourth embodiment of the invention;

Fig. 5a shows a schematic representation of a Power-To-Hydrogen system according to a fifth embodiment of the invention;

Fig. 5b shows a schematic representation of a Power-To-Hydrogen system according to a sixth embodiment of the invention;

Fig. 5c shows a schematic representation of a Power-To-Hydrogen system according to a seventh embodiment of the invention;

Fig. 6 shows a flowchart of a method for operating a Power-To-Hydrogen system according to a first embodiment of the invention;

Fig. 7 shows a flowchart of a method for operating a Power-To-Hydrogen system according to a second embodiment of the invention;

Fig. 8 a flowchart of a method for operating a Power-To-Hydrogen system according to a third embodiment of the invention;

Fig. 9 shows a flowchart of a method for operating a Power-To-Hydrogen system according to a fourth embodiment of the invention and

Fig. 10 shows a schematic representation of selected operational parameters of a Power-To-Hydrogen system operated in accordance with an instance of the method according to the invention.

In the Figures, like reference numerals designate like or functionally equivalent elements, unless otherwise indicated.

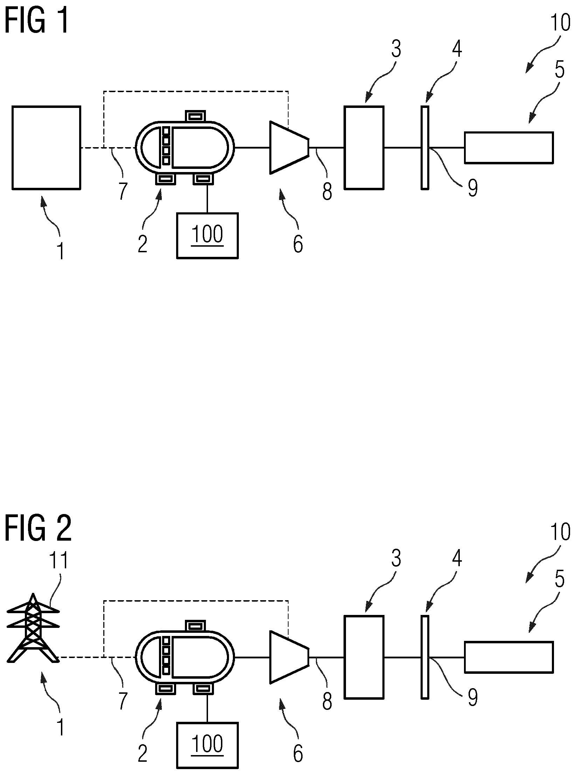

In **Fig. 1** a schematic representation of a Power-To-Hydrogen system 10 according to a first embodiment of the invention is shown. The Power-To-Hydrogen system 10 comprises at least one electricity source 1, at least one electrolyzer 2 for producing hydrogen from electricity received from the electricity source 1, a first hydrogen storage device 3 with permanent availability coupled to the electrolyzer 2. The Power-To-Hydrogen system 10 further comprises a compressor 6 coupled to the electrolyzer 2 and the first hydrogen storage device 3 that to compresses hydrogen produced by the electrolyzer 2 before feeding the first hydrogen storage device 3.

The electricity source 1 is coupled to the electrolyzer 2 and the compressor through electricity lines 7 (dashed lines).

The Power-To-Hydrogen system 10 further comprises a hydrogen transfer station 4 coupled to the first hydrogen storage device 3. The hydrogen transfer station 4 is coupled at least temporarily to a second hydrogen storage device 5 with time-dependent availability for a transfer of hydrogen from the first hydrogen storage device 3 to the second hydrogen storage device 5.

The electrolyzer 2 is coupled to the compressor 6 through a hydrogen line 8 (solid line). The compressor 6 is coupled to the first hydrogen storage device 3 through a further hydrogen line 8 (solid line) as well as the first hydrogen storage device 3 to the hydrogen transfer station 4.

The hydrogen transfer station 4 comprises at least one hydrogen transfer interface 9 to that the second hydrogen storage device 5 with time-dependent availability is coupled, in particular detachably coupled.

The Power-To-Hydrogen system 10 further comprises a processing entity 100 for controlling at least a hydrogen production rate of the electrolyzer 2. The processing entity 100 is operable to control a hydrogen production rate of the electrolyzer 2 based on a forecasted total available hydrogen storage capacity, wherein the forecasted total available hydrogen storage capacity comprises a storage capacity of the first hydrogen storage device 3 and a time-dependent storage capacity of the second hydrogen storage device 5 provided by a hydrogen storage capacity model.

The Power-To-Hydrogen system 10 according to a second embodiment of the invention shown in **Fig. 2** comprises a connection to an electrical grid 11 as electricity source 1 and is otherwise identical to the first embodiment.

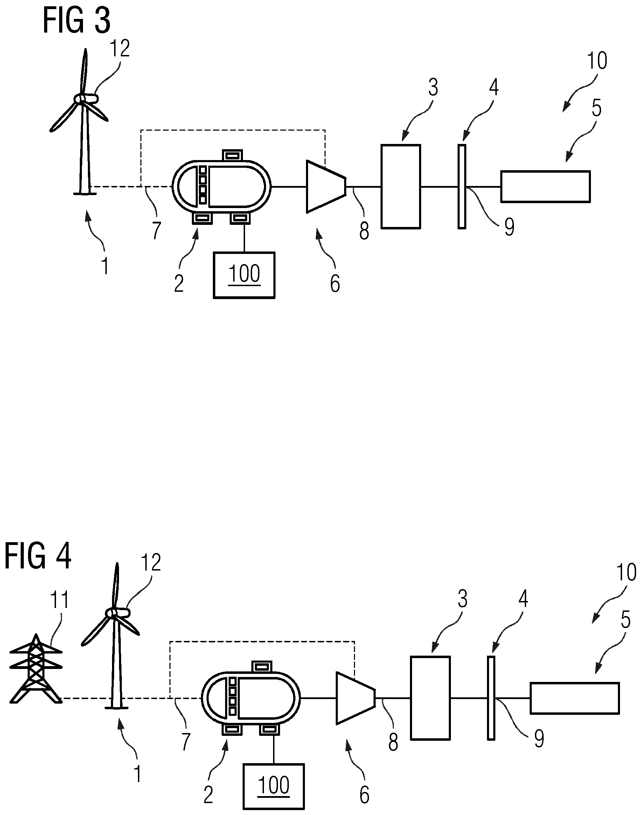

The Power-To-Hydrogen system 10 according to a third embodiment of the invention shown in **Fig. 3** comprises a local electricity generating entity 12, in particular at least one wind turbine 12, as electricity source 1 and is otherwise identical to the first embodiment. The Power-To-Hydrogen system 10 can in particular be operated as an "island system", e.g. in remote regions without connection to electrical grids.

The Power-To-Hydrogen system 10 according to a fourth embodiment of the invention shown in **Fig. 4** comprises both a local electricity generating entity 12, in particular at least one wind turbine 12, and a connection to an electrical grid 11 as electricity source 1 and is otherwise identical to a combination of the first and the second embodiment. The connection to the electrical grid 11 can be a bidirectional connection. On the one hand, electricity can be drawn from the electrical grid 11 for hydrogen production in the electrolyzer 2, e.g. in case of low or negative electricity prices and/or when the Power-To-Hydrogen system 10 is requested as a downward reserve to the electrical grid 11. On the other hand, electricity produced by the local electricity generating entity 12, in particular at least one wind turbine 12, can be fed to the grid, e.g. in case of a lack of hydrogen storage capacity on site and/or when the electricity price exceeds the hydrogen price.

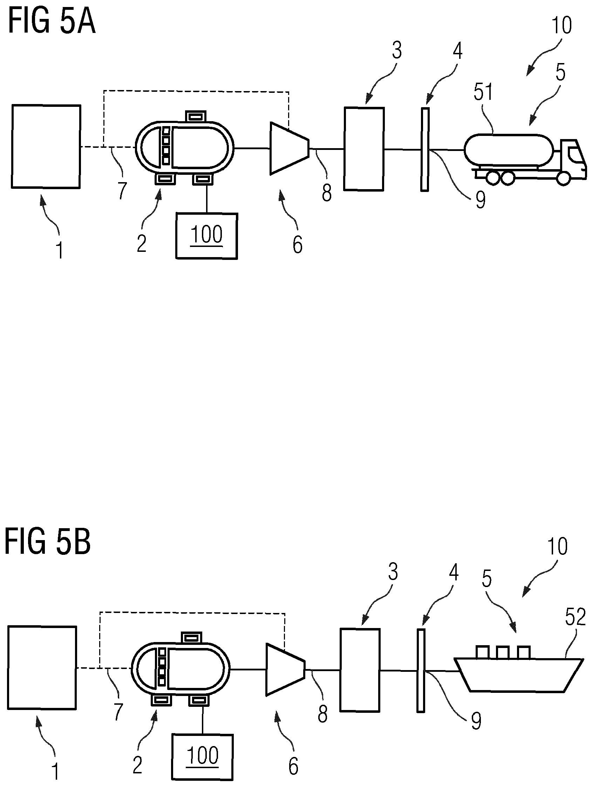

The Power-To-Hydrogen system 10 according to a fifth embodiment of the invention shown in **Fig. 5a** comprises a mobile hydrogen storage unit 51, namely a gas transport truck 51, as second hydrogen storage device 5.
The Power-To-Hydrogen system 10 according to a sixth embodiment of the invention shown in **Fig. 5b** comprises a mobile hydrogen storage unit 52, namely a gas transport vessel 52, as second hydrogen storage device 5.

Otherwise the fifth and sixth embodiments are identical to the first embodiment.

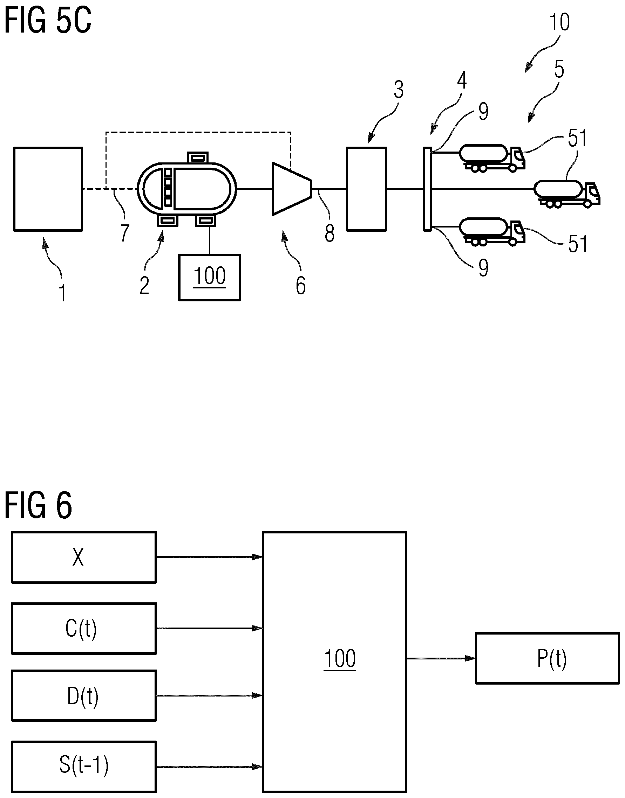

The Power-To-Hydrogen system 10 according to a seventh embodiment of the invention shown in **Fig. 5c** comprises a hydrogen transfer station 4 with three hydrogen transfer interfaces 9 to that three mobile hydrogen storage units 51, in particular gas transport trucks 51, are detachably coupled. It is obvious that the Power-To-Hydrogen system 10 can comprise more or less hydrogen transfer interfaces 9 at the hydrogen transfer station 4 or can even comprise more than one hydrogen transfer station 4.

**Fig. 6** shows a simplified flowchart of a method for operating a Power-To-Hydrogen system 10 according to a first embodiment that is in particular executed in at least one processing entity 100 of the Power-To-Hydrogen system 10.

The processing entity 100 is operated to control the hydrogen production rate $P(t)$ (output) of the electrolyzer 2 based on information about the storage capacity X of the first hydrogen storage device 3, the time-dependent storage capacity of the second hydrogen storage device(s) 5,51,52 provided by a hydrogen storage capacity model $C(t)$, the hydrogen demand provided by a hydrogen demand model $D(t)$ and the total hydrogen filling level (in both the first and second hydrogen storage devices) at a prior time step $S(t-1)$.

To control the hydrogen production rate $P(t)$ the processing entity 100 in particular solves or approximates a difference equation describing a relationship between hydrogen production, hydrogen demand and hydrogen storage with respective time-dependencies. The control can be in particular based on the generic constraint that a total hydrogen filling level $S(t)$ (in both the first and second hydrogen storage devices) has to be equal or less than the total available hydrogen storage capacity $X + C(t)$ at all times.

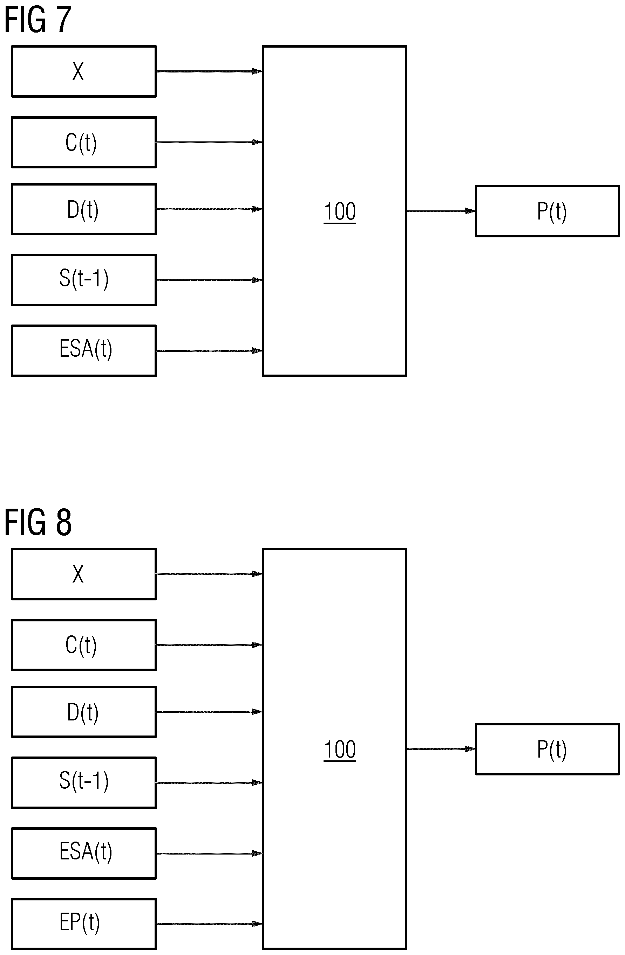

**Fig. 7** shows a simplified flowchart of a method for operating a Power-To-Hydrogen system 10 according to a second embodiment that is in particular executed in at least one processing entity 100 of the Power-To-Hydrogen system 10. The method additionally considers a forecasted availability $ESA(t)$ of the electricity source 1 in the control of the hydrogen production rate $P(t)$ and is otherwise identical to the first embodiment.

The forecasted availability of the electricity source $ESA(t)$ can in particular comprise information on time-dependent available quantities of electricity. On the one hand, this can include information on a planned control intervention to the electrical grid 11, i.e. certain time slots in that the P2H system 10 is requested to operate as downward reserve to the electrical grid 11 for frequency and/or voltage stabilization. On the other hand, the information on time-dependent available quantities of electricity can comprise a production forecast of the local electricity generating entity 12, in particular of the renewable energy source, and can be based, for example, on at least one time-dependent weather parameter, in particular a local solar irradiation and/or a local wind parameter.

**Fig. 8** shows a simplified flowchart of a method for operating a Power-To-Hydrogen system 10 according to a third embodiment that is in particular executed in at least one processing entity 100 of the Power-To-Hydrogen system 10. The method additionally considers an electricity price $EP(t)$, in particular a forecasted electricity price and/or a spot market price, in the control of the hydrogen production rate $P(t)$ and is otherwise identical to the second embodiment.

The consideration of the electricity price $EP(t)$ in the control of the hydrogen production rate $P(t)$ renders the operation of the P2H system 10 even more economical, in particular because it allows the P2H system 10 to participate in the electricity market and benefit from volatile electricity prices, e.g. on the spot market.

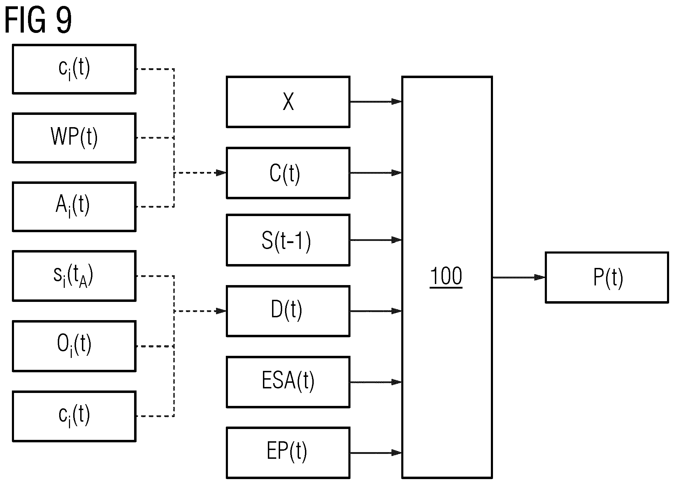

**Fig. 9** shows a simplified flowchart of a method for operating a Power-To-Hydrogen system 10 according to a fourth embodiment that is in particular executed in at least one processing entity 100 of the Power-To-Hydrogen system 10. The method according to the fourth embodiment considers further parameters in the determination of the time-dependent storage capacity of the second hydrogen storage device(s) 5,51,52 provided by the hydrogen storage capacity model $C(t)$ and the hydrogen demand provided by the hydrogen demand model $D(t)$ and is otherwise identical to the third embodiment.

Firstly, the hydrogen storage capacity model C(t) considers the availability of one or multiple mobile hydrogen storage units 5,51,52 at the hydrogen transfer station 4 in the form of an availability schedule of mobile hydrogen storage units $A_i$(t). The availability schedule $A_i$(t) can be, for example, understood as a timetable that provides information about times of presence of one or multiple mobile hydrogen storage units 5,51,52 at the hydrogen transfer station 4 and can be derived from a logistics planning system. Further, the hydrogen storage capacity model C(t) considers the storage capacity $c_i$(t) of a specific mobile hydrogen storage unit 5,51,52 at time t. In addition, the hydrogen storage capacity model C(t) considers at least one time-dependent weather parameter WP(t), in particular a temperature. The consideration of a temperature in the hydrogen storage capacity model C(t) increases accuracy as the volume change of the hydrogen with changing temperature is taken into account.

The hydrogen demand model D(t) on the other hand considers a departure schedule $O_i$(t) of one or multiple mobile hydrogen storage units 5,51,52 from the hydrogen transfer station 4. The departure schedule $O_i$(t) can be, for example, understood as a timetable that provides information about departure times of one or multiple mobile hydrogen storage units 5,51,52 from the hydrogen transfer station 4 and can likewise be derived from a logistics planning system.

Additionally, the hydrogen demand model D(t) considers the storage capacity $c_i$(t) of a specific mobile hydrogen storage unit 5,51,52 and an initial hydrogen filling level $s_i(t_A)$ of a specific mobile hydrogen storage unit 5,51,52 before coupling to the hydrogen transfer station, i.e. at their time of arrival $t_A$ to calculate an effectively available storage capacity for a specific mobile hydrogen storage unit 5,51,52. The storage capacity $c_i$(t) of a specific mobile hydrogen storage unit 5,51,52 can likewise consider at least one time-dependent weather parameter, in particular a temperature, to account for temperature-dependent volume changes of the hydrogen.

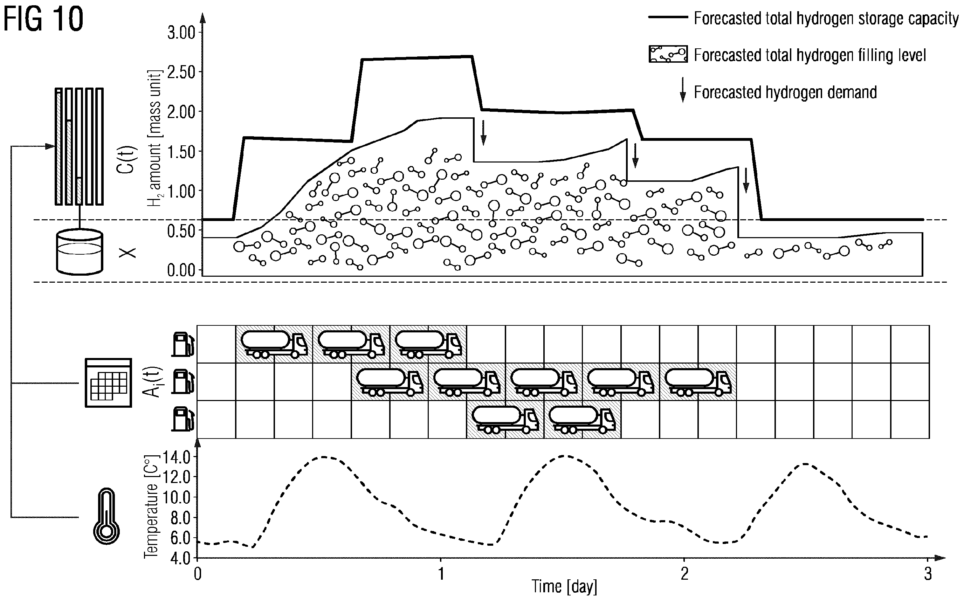

In **Fig. 10** a schematic representation of selected operational parameters of a Power-To-Hydrogen system 10 operated with an instance of the method according to the invention is shown in three charts sharing a common x-axis for the time (in days).

The upper chart shows a hydrogen amount in a mass unit (e.g. kilograms or tons) on the y-axis and comprises three graphs:

- The forecasted total hydrogen storage capacity as a solid line,
- the forecasted total hydrogen filling level as a solid area and
- the forecasted hydrogen demand with discrete arrows.

The forecasted total hydrogen storage capacity comprises the storage capacity X of the (stationary) first hydrogen storage device 3 and the time-dependent storage capacity of the second (mobile) hydrogen storage device(s) 5,51,52 provided by the hydrogen storage capacity model C(t).

The main influencing factor on the forecasted total hydrogen storage capacity, in particular on the hydrogen storage capacity model C(t), is the availability schedule $A_i$(t) of mobile hydrogen storage units 5,51,52 at the hydrogen transfer station 4 which is illustrated in the chart in the middle for a hydrogen transfer station 4 with three hydrogen transfer interfaces 9 to which, at specific times, mobile hydrogen storage units 5,51,52, in particular gas transport trucks, are coupled or not coupled.

Another important influence on the forecasted total hydrogen storage capacity is the time course of the local temperature, which is illustrated in the lower chart. This can be easily understood by looking at the solid line (forecasted total hydrogen storage capacity) in the upper chart that exhibits a decreasing slope for times of temperature increase and an increasing slope for times of temperature decrease which is representative for the temperature dependency of the hydrogen's mass and volume.

At times of a hydrogen demand (discrete arrows in the upper chart), i.e. one or multiple mobile hydrogen storage units 5,51,52 leaving the site, both a decrease in the forecasted total hydrogen storage capacity (solid line) and the forecasted total hydrogen filling level (solid area) can be observed in the upper chart.

The core of the method according to the invention lies in that the first hydrogen storage device 3 with permanent availability and the second hydrogen storage device(s) 5,51,52 with time-dependent availability are seen a common storage asset which helps to utilize the P2H system's production capacity, in particular the production capacity of the electrolyzer, in an optimal way. As the second hydrogen storage device(s) 5,51,52 with time-dependent availability are considered and used as temporarily available storage means the effectively available storage capacity on site can be virtually increased without investment costs for a larger stationary gas tank. In other words, the method according to the invention allows for a "just-in-time" hydrogen production.

Although the present invention has been described in accordance with preferred embodiments, it is obvious for the person skilled in the art that modifications are possible in all embodiments.

**Claims**

1. Method for operating a Power-To-Hydrogen system (10),
   the Power-To-Hydrogen system (10) comprising

   - at least one electricity source (1),
   - at least one electrolyzer (2) for producing hydrogen from electricity received from the electricity source (1),
   - a first hydrogen storage device (3) with permanent availability coupled to the electrolyzer (2) and
   - a hydrogen transfer station (4) coupled to the first hydrogen storage device (3) and/or the electrolyzer (2),
   - wherein the hydrogen transfer station (4) is adapted and configured to be coupled temporarily to one or multiple second hydrogen storage devices (5,51,52) with time-dependent availability for a transfer of hydrogen from the first hydrogen storage device (3) and/or the electrolyzer (2) to the one or multiple second hydrogen storage devices (5,51,52),

   **characterized in that**
   a hydrogen production rate ($P(t)$) of the electrolyzer (2) is controlled based on a forecasted total available hydrogen storage capacity, wherein the forecasted total available hydrogen storage capacity comprises a storage capacity ($X$) of the first hydrogen storage device (3) and a time-dependent storage capacity of the second hydrogen storage device (5,51,52) provided by a hydrogen storage capacity model ($C(t)$).

2. Method according to claim 1,

   wherein the one or multiple second hydrogen storage devices (5,51,52) comprise one or multiple mobile hydrogen storage units (51,52), in particular gas carriers (51,52), the availability of which at the hydrogen transfer station (4) is considered in the hydrogen storage capacity model ($C(t)$) and/or
   wherein the first hydrogen storage device (3) is a stationary hydrogen storage unit, in particular comprising at least one gas tank.

3. Method according to any of the preceding claims,
   wherein the hydrogen storage capacity model ($C(t)$) considers at least one time-dependent weather parameter ($WP(t)$), in particular a local temperature.

4. Method according to claim 2 or 3, wherein the hydrogen storage capacity model ($C(t)$) considers an availability schedule ($A_i(t)$) of mobile hydrogen storage units (51,52) at the hydrogen transfer station (4).

5. Method according to any of the preceding claims,
   wherein the hydrogen production rate ($P(t)$) of the electrolyzer (2) is further controlled based on a forecasted hydrogen demand, wherein the forecasted hydrogen demand in particular comprises a forecast on amounts of hydrogen to be transferred to the one or multiple second hydrogen storage devices (5,51,52) at a specific time.

6. Method according to claim 5,
   wherein the forecasted hydrogen demand is provided by a hydrogen demand model ($D(t)$), considering a departure schedule ($O_i(t)$) of one or multiple mobile hydrogen storage units (51,52) from the hydrogen transfer station (4).

7. Method according to claim 6,
   wherein the hydrogen demand model ($D(t)$) further considers an initial hydrogen filling level ($s_i(t_A)$) of the one or multiple mobile hydrogen storage units (51,52) before the latter are coupled to the hydrogen transfer station (4).

8. Method according to any of the preceding claims,
   wherein the electricity source (1) comprises a connection to an electrical grid (11), in particular a medium voltage or high voltage grid, and/or a local electricity generating entity (12), in particular a renewable energy source (12).

9. Method according to any of the preceding claims,
   wherein the Power-To-Hydrogen system (10) comprises at least one compressor (6) coupled to the electrolyzer (2) and the first hydrogen storage device (3), the compressor (6) being adapted and configured to compress hydrogen produced by the electrolyzer (2) before feeding the first hydrogen storage device (3).

10. Method according to claim 8 or 9,

wherein the Power-To-Hydrogen system (10) is used as a downward reserve in an electrical grid (11), in particular wherein the electrolyzer (2) consumes excess electricity from the electrical grid (11) for frequency and/or voltage stabilization of the electrical grid (11).

11. Method according to any of the preceding claims,
wherein the hydrogen production rate (P(t)) of the electrolyzer (2) is further controlled based on a forecasted availability (ESA(t)) of the electricity source (1), the forecasted availability (ESA(t)) of the electricity source (1) in particular comprising information on time-dependent available quantities of electricity.

12. Method according to any of the preceding claims,
wherein the forecasted availability (ESA(t)) of the electricity source (1) considers at least one time-dependent weather parameter, in particular a local solar irradiation and/or a local wind parameter.

13. Method according to any of the preceding claims,
wherein the hydrogen production rate (P(t)) of the electrolyzer (2) is further controlled based on an electricity price (EP(t)), in particular a forecasted electricity price (EP(t)).

14. Method according to any of the preceding claims, comprising a comparison of the forecasted total available hydrogen storage capacity with a forecasted total hydrogen filling level (S(t)) in the first (3) and second hydrogen storage devices (5,51,52) and based on a result of the comparison

- controlling the hydrogen production rate (P(t)) of the electrolyzer (2) and/or
- providing at least one or multiple further second hydrogen storage devices (5,51,52) to the hydrogen transfer station (4) to extend the total available hydrogen storage capacity.

15. Power-To-Hydrogen system (10) comprising

- at least one electricity source (1),
- at least one electrolyzer (2) for producing hydrogen from electricity received from the electricity source (1),
- a first hydrogen storage device (3) with permanent availability coupled to the electrolyzer (2) and
- a hydrogen transfer station (4) coupled to the first hydrogen storage device (3) and/or the electrolyzer (2),
- wherein the hydrogen transfer station (4) is adapted and configured to be coupled temporarily to one or multiple second hydrogen storage devices (5,51,52) with time-dependent availability for a transfer of hydrogen from the first hydrogen storage device (3) and/or the electrolyzer (2) to the one or multiple second hydrogen storage devices (5,51,52) and
- a processing entity (100) for controlling at least a hydrogen production rate (P(t)) of the electrolyzer (2),

**characterized in that**
the processing entity (100) is operable to execute the method according to any of the claims 1 - 14.

## FIG 1

## FIG 2

FIG 3

FIG 4

FIG 5A

FIG 5B

## FIG 5C

## FIG 6

## FIG 7

## FIG 8

# FIG 9

FIG 10

EP 4 545 689 A1

Europäisches
Patentamt

European
Patent Office

Office européen
des brevets

# EUROPEAN SEARCH REPORT

**Application Number**

EP 23 20 6190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/083781 A1 (TOSHIBA KK [JP]; TOSHIBA ENERGY SYSTEMS & SOLUTIONS CORP [JP]) 11 May 2018 (2018-05-11) * the whole document * | 1,2,4-8, 10,11, 14,15 | INV. C25B15/02 C25B15/08 C25B1/04 H02J3/28 |
| X | CN 114 134 512 A (LIMITED RESPONSIBILITY COMPANY OF NAT ENERGY INVESTMENT GROUP ET AL.) 4 March 2022 (2022-03-04) * the whole document * | 1,2,4-8, 10,11, 14,15 | H02J15/00 G06Q10/04 |
| X | WO 2017/158762 A1 (TOSHIBA KK [JP]) 21 September 2017 (2017-09-21) * the whole document * | 1-8, 10-12, 14,15 | |
| X | WO 2020/075771 A1 (ASAHI CHEMICAL IND [JP]) 16 April 2020 (2020-04-16) * the whole document * | 1-15 | |
| X | US 2021/405603 A1 (NAGINO GOSHU [JP] ET AL) 30 December 2021 (2021-12-30) | 1-8, 10-15 | |
| Y | * abstract; claims 1, 6-16, 19-20; figures 1, 4-6 * * paragraph [0015] - paragraph [0022] * * paragraph [0025] - paragraph [0031] * * paragraph [0054] - paragraph [0159] * | 9 | **TECHNICAL FIELDS SEARCHED (IPC)** C25B H02J G06Q |
| Y | US 2021/156039 A1 (BALLANTINE ARNE [US] ET AL) 27 May 2021 (2021-05-27) * the whole document * | 9 | |
| A | US 2005/276749 A1 (NOUJIMA MASAFUMI [JP] ET AL) 15 December 2005 (2005-12-15) * the whole document * | 1-15 | |

The present search report has been drawn up for all claims

| Place of search | Date of completion of the search | Examiner |
|---|---|---|
| Munich | 23 May 2024 | Leu, Oana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 6190

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2024

| Patent document cited in search report | Publication date | Patent family member(s) | | Publication date |
|---|---|---|---|---|
| WO 2018083781 A1 | 11-05-2018 | JP | 6441542 B2 | 19-12-2018 |
| | | JP WO2018083781 A1 | | 01-11-2018 |
| | | WO | 2018083781 A1 | 11-05-2018 |
| CN 114134512 A | 04-03-2022 | NONE | | |
| WO 2017158762 A1 | 21-09-2017 | JP | 6462951 B2 | 30-01-2019 |
| | | JP WO2017158762 A1 | | 09-08-2018 |
| | | WO | 2017158762 A1 | 21-09-2017 |
| WO 2020075771 A1 | 16-04-2020 | JP | 7157815 B2 | 20-10-2022 |
| | | JP WO2020075771 A1 | | 02-09-2021 |
| | | WO | 2020075771 A1 | 16-04-2020 |
| US 2021405603 A1 | 30-12-2021 | AU | 2020250405 A1 | 21-10-2021 |
| | | AU | 2023258461 A1 | 23-11-2023 |
| | | CA | 3133043 A1 | 08-10-2020 |
| | | CN | 113574008 A | 29-10-2021 |
| | | EP | 3950575 A1 | 09-02-2022 |
| | | JP | 7221376 B2 | 13-02-2023 |
| | | JP WO2020203520 A1 | | 21-10-2021 |
| | | US | 2021405603 A1 | 30-12-2021 |
| | | WO | 2020203520 A1 | 08-10-2020 |
| US 2021156039 A1 | 27-05-2021 | AU | 2020386982 A1 | 23-06-2022 |
| | | EP | 4061984 A1 | 28-09-2022 |
| | | JP | 2023502781 A | 25-01-2023 |
| | | TW | 202132624 A | 01-09-2021 |
| | | US | 2021156039 A1 | 27-05-2021 |
| | | US | 2023272543 A1 | 31-08-2023 |
| | | WO | 2021102405 A1 | 27-05-2021 |
| US 2005276749 A1 | 15-12-2005 | CN | 1706988 A | 14-12-2005 |
| | | DE 102005006774 A1 | | 05-01-2006 |
| | | JP | 4899294 B2 | 21-03-2012 |
| | | JP | 2005350299 A | 22-12-2005 |
| | | US | 2005276749 A1 | 15-12-2005 |

EPO FORM P0459

For more details about this annex : see Official Journal of the European Patent Office, No. 12/82